# EUROPEAN PATENT APPLICATION

(11) **EP 4 040 403 A2**
(43) Date of publication of application: **10.08.2022**
(21) Application number: 22164259.8
(22) Date of filing: 25.03.2022
(51) Int. Cl.: G06V 20/56

(54) **METHOD AND APPARATUS FOR UPDATING MAP DATA USING VEHICLE CAMERA**

(30) Priority: 03.06.2021 CN 202110620422
(71) Applicant: BEIJING BAIDU NETCOM SCIENCE TECHNOLOGY CO., LTD., No. 10 Shangdi 10th Street Haidian District Beijing 100085 (CN)
(72) Inventor: Wang, Yufeng, Haidian District, Beijing, 100085 (CN)
(74) Representative: Lucke, Andreas

(57) **Abstract**

A method and apparatus for correcting image data, an electronic device, a computer readable storage medium and an autonomous vehicle are provided. An embodiment of the method includes: acquiring auxiliary feedback data in response to absence of a target object in current feedback data, the target object being included in historical feedback data, collection time of the auxiliary feedback data being after collection time of the current feedback data, a difference between collection time of the historical feedback data and the collection time of the current feedback data being less than a first preset duration; extracting image data of the target object in response to the target object being included in the auxiliary feedback data; and correcting the current feedback data based on the image data.

## Description

### TECHNICAL FIELD

The present disclosure relates to the field of data processing technology, in particular to the technical fields of artificial intelligence such as autonomous driving, scenario monitoring, and intelligent transportation, and more particular to a method and apparatus for correcting image data, an electronic device, a computer readable storage medium, and a computer program product.

### BACKGROUND

With the development of autonomous vehicle business, driving data and road data feedback become important parts of autonomous driving. In order to facilitate drivers and monitoring personnel to understand the operating status of autonomous vehicles and road information, usually, a corresponding feedback screen is generated based on the driving data and road data obtained from the feedback. For example, a human machine interface (HMI) rendering system generates a corresponding feedback video based on the collected feedback data.

Therefore, it is particularly important to provide a display system for autonomous vehicles.

### SUMMARY

Embodiments of the present disclosure propose a method and apparatus for correcting image data, an electronic device, a computer readable storage medium, and a computer program product.

In a first aspect, some embodiments of the present disclosure provide a method for correcting image data. The method includes: acquiring auxiliary feedback data in response to absence of a target object in current feedback data, the target object being included in historical feedback data, collection time of the auxiliary feedback data being after collection time of the current feedback data, a difference between collection time of the historical feedback data and the collection time of the current feedback data being less than a first preset duration; extracting image data of the target object in response to the target object being included in the auxiliary feedback data; and correcting the current feedback data based on the image data.

In a second aspect, some embodiments of the present disclosure provide an apparatus for correcting image data. The apparatus includes: an auxiliary feedback data acquiring unit, configured to acquire auxiliary feedback data in response to absence of a target object in current feedback data, the target object being included in historical feedback data, collection time of the auxiliary feedback data being after collection time of the current feedback data, a difference between collection time of the historical feedback data and the collection time of the current feedback data being less than a first preset duration; a target object extracting unit, configured to extract image data of the target object in response to the target object being included in the auxiliary feedback data; and an image data correcting unit, configure to correct the current feedback data based on the image data.

In a third aspect, some embodiments of the present disclosure provide an electronic device. The electronic device includes at least one processor; a memory, communicatively connected to the at least one processor; where the memory, storing instructions executable by the at least one processor, the instructions, when executed by the at least one processor, cause the at least one processor to perform the method for correcting image data according to any one of implementations in the first aspect.

In a fourth aspect, some embodiments of the present disclosure provide a non-transitory computer readable storage medium, storing computer instructions thereon, the computer instructions, being used to cause the computer to perform the method for correcting image data according to any one of implementations in the first aspect.

In a fifth aspect, some embodiments of the present disclosure provide a computer program product, comprising a computer program, the computer program, when executed by a processor, cause the processor to perform the method for correcting image data according to any one of implementations in the first aspect.

It should be understood that the content described in this section is not intended to identify key or important features of the embodiments of the present disclosure, nor to limit the scope of the present disclosure. Other features of the present disclosure will be easily understood through the following description.

### BRIEF DESCRIPTION OF THE DRAWINGS

By reading the detailed description of non-limiting embodiments with reference to the following accompanying drawings, other features, objects and advantages of the present disclosure will become more apparent:
Fig. 1 is an exemplary system architecture diagram to which embodiments of the present disclosure may be applied;
Fig. 2 is a flowchart of a method for correcting image data according to an embodiment of the present disclosure;
Fig. 3 is a flowchart of another method for correcting image data according to an embodiment of the present disclosure;
Fig. 4a, 4b, 4c, and 4d are schematic diagrams of feedback images corresponding to feedback data in the method for correcting image data in an application scenario provided by embodiments of the present disclosure;
Fig. 5 is a structural block diagram of an apparatus for correcting image data according to an embodiment of the present disclosure; and
Fig. 6 is a schematic structural diagram of an electronic device suitable for performing the method for correcting image data according to an embodiment of the disclosure.

### DETAILED DESCRIPTION OF EMBODIMENTS

The following describes exemplary embodiments of the present disclosure in conjunction with the accompanying drawings, which includes various details of the embodiments of the present disclosure to facilitate understanding, and they should be considered as merely exemplary. Therefore, those of ordinary skill in the art should recognize that various changes and modifications can be made to the embodiments described herein without departing from the scope and spirit of the present disclosure. Also, for clarity and conciseness, descriptions of well-known functions and structures are omitted in the following description. It should be noted that the embodiments in the present disclosure and the features in the embodiments may be combined with each other on a non-conflict basis.

In addition, in the technical solution of the present disclosure, the acquisition (for example, feedback data including face objects, etc. involved in the follow-up of the present disclosure), storage, and application of user personal information involved are in compliance with relevant laws and regulations, and does not violate public order and good customs.

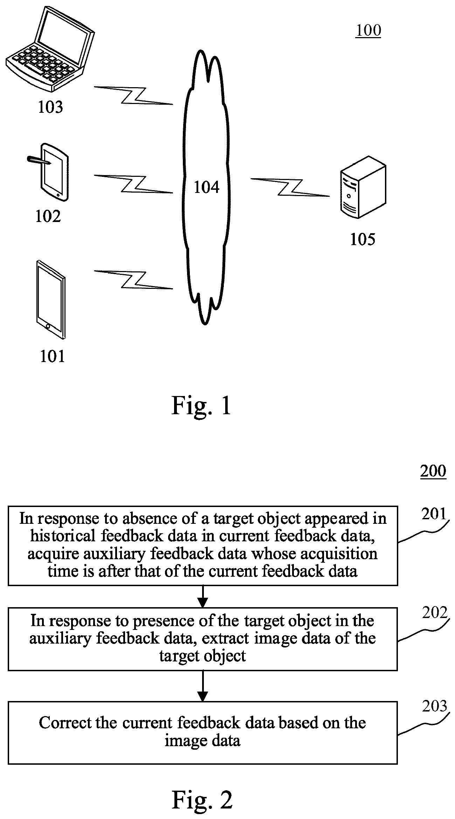

Fig. 1 shows an exemplary system architecture 100 to which embodiments of a method and apparatus for correcting image data, an electronic device and a computer readable storage medium of the present disclosure may be applied.

As shown in Fig. 1, the system architecture 100 may include terminal device(s) 101, 102, 103, a network 104 and a server 105. The network 104 serves as a medium for providing a communication link between the terminal device(s) 101, 102, 103 and the server 105. The network 104 may include various types of connections, such as wired or wireless communication links, or optical fiber cables.

A user may use the terminal device(s) 101, 102, 103 to interact with the server 105 through the network 104 to receive or send messages and so on. The terminal device(s) 101, 102, 103 and the server 105 may be installed with a variety of applications for information communication between the two, such as autonomous driving applications, feedback data monitoring applications, or instant messaging applications.

The terminal devices 101, 102, 103 and the server 105 may be hardware or software. When the terminal devices 101, 102, 103 are hardware, they may be various electronic devices having display screens, including but not limited to smart phones, tablet computers, laptop computers, desktop computers, and so on. When the terminal devices 101, 102, 103 are software, they may be installed in the electronic devices listed above. They may be implemented as a plurality of software or software modules, or as a single software or software module, which is not limited herein. When the server 105 is hardware, it may be implemented as a distributed server cluster composed of a plurality of servers, or as a single server. When the server is software, it may be implemented as a plurality of software or software modules, or as a single software or software module, which is not limited herein.

The server 105 may provide various services through various built-in applications. Taking an autonomous driving application capable of providing autonomous driving control based on road feedback data as an example, the server 105 may achieve the following effects when running the autonomous driving application: first, acquires a plurality of feedback data continuously acquired from the terminal device(s) 101, 102, 103 through the network 104, and in response to the current feedback data not including a target object which is included in historical feedback data, the difference between the collection times of the current feedback data and the historical feedback data being less than a first preset duration, acquires auxiliary feedback data, the collection time of the auxiliary feedback data being after the collection time of the current feedback data; then, the server 105 extracts, image data of the target object in response to the target object being included in the auxiliary feedback data; and finally the server 105 corrects the current feedback data based on the image data.

It should be noted that in addition to acquiring the plurality of feedback data continuously acquired from the terminal device(s) 101, 102, 103 through the network 104, the plurality of feedback data may also be prestored locally in the server 105 in various methods. Therefore, when detects that the data has been stored locally (for example, feedback data acquired before the processing is started), the server 105 may choose to directly acquire the data locally. In this case, the exemplary system architecture 100 may not include the terminal devices 101, 102, 103 and the network 104.

Since storing data, extracting objects in the feedback data, and correcting the feedback data require more computing resources and strong computing power, the method for correcting image data provided in subsequent embodiments of the present disclosure is generally executed by the server 105 having strong computing power and more computing resources. Correspondingly, the apparatus for correcting image data is generally also provided in the server 105. However, it should also be noted that when the terminal device(s) 101, 102, 103 also has/have the required computing power and computing resources, the terminal device(s) 101, 102, 103 may also use the autonomous driving applications installed thereon to complete the above various calculations that were originally assigned to the server 105, and then output the same results as the server 105. Especially when there are a plurality of terminal devices with different computing capabilities at the same time, when an autonomous driving application judges that the terminal device where it is installed has strong computing power and more computing resources, the terminal device may be used to execute the above calculations, thereby appropriately reducing a computing pressure on the server 105. Correspondingly, the apparatus for correcting image data may also be provided in the terminal device(s) 101, 102, 103. In this case, the exemplary system architecture 100 may not include the server 105 and the network 104.

It should be appreciated that the number of the terminal devices, the network and the server in Fig. 1 is merely illustrative. Any number of terminal devices, networks and servers may be provided according to implementation needs.

With reference to Fig. 2, illustrating a flow 200 of a method for correcting image data according to an embodiment of the present disclosure. The flow 200 includes the following steps:

Step 201, acquiring auxiliary feedback data in response to absence of a target object in current feedback data, the target object being included in historical feedback data, collection time of the auxiliary feedback data being after collection time of the current feedback data.

In the present embodiment, an executing body (for example, the server 105 shown in Fig. 1) of the method for correcting image data continuously acquires a plurality of feedback data, and responds when the target object that appeared in historical feedback data is absent in the current feedback data, and acquires the auxiliary feedback data whose collection time is after the collection time of the current feedback data.

The difference between the collection time of the historical feedback data and the collection time of the current feedback data is less than a first preset duration. The first preset duration may usually be determined according to a sensor that collects the feedback data or a speed of a moving object corresponding to the feedback data, so as to determine the matching collection time according to the actual movement of the moving object, so as to avoid inaccurate judgment on whether the feedback data is abnormal and/or delayed correction of abnormal feedback caused by the first preset duration being too long.

It should be understood that the auxiliary feedback data is collected by the same collecting device (e.g., the sensor) as the current feedback data, and the collection time of the auxiliary feedback data is after the collection time of the current feedback data, usually for improving the quality of detection for abnormal feedback data performed on the current feedback data. Collection time of the auxiliary feedback data is preferably provided by the sensor, and the feedback data whose collection time is closest to the collection time of the current feedback data is used as the auxiliary feedback data.

It should be noted that each feedback data may be acquired directly from a local storage device by the executing body, or may be acquired from a non-local storage device (for example, the terminal device(s) 101, 102, 103 shown in Fig. 1). The local storage device may be a data storage module, such as a server hard disk, set in the executing body. In this case, each feedback data may be quickly read locally. The non-local storage device may also be any other electronic device that is set to store data, such as some user terminals. In this case, the executing body may acquire each required feedback by sending an acquisition command to the electronic device.

Step 202, extracting image data of the target object in response to the target object being included in the auxiliary feedback data.

In the present embodiment, based on the auxiliary feedback data extracted in the above step 201, the auxiliary feedback data is analyzed to determine the content included in the auxiliary feedback data. When it is determined that the target object determined in step 201 is included in the auxiliary feedback data, the image data of the target object is extracted from the historical data and/or the auxiliary feedback data.

It should be understood that when the historical data and/or the auxiliary feedback data includes feedback data of the target object in another non-image data form, the executing body may convert the data in the another non-image data form to corresponding image data through a local or non-local conversion and rendering apparatus.

Step 203, correcting the current feedback data based on the image data.

In the present embodiment, after the image data of the target object is acquired based on the above step 202, the content of the image data is supplemented to the current feedback data to correct the content in the current feedback data, so that when a feedback image and/or feedback information is generated by rendering based on the corrected current feedback data, the generated feedback image and/or feedback information includes the content corresponding to the target object.

In the method for correcting image data provided by embodiments of the present disclosure, after feedback data is continuously acquired, if a target object appeared in historical feedback data does not exist in the current feedback data, the historical feedback data being collected within a preset duration preceding the collection time of the current feedback data, it is determined that the current feedback data may be abnormal, and then auxiliary feedback data collected after the current feedback data may be used to perform auxiliary detection. If it is determined that the content of the current feedback data is abnormal, image data of the target object is added to the current feedback data, realizing correction of the current feedback data, avoiding detection flicker due to abnormal individual feedback data, and improving the quality of the feedback data.

In some alternative implementations of the present embodiment, in the process of extracting the image data corresponding to the target object and correcting the current feedback data based on the image data, since the moving object corresponding to the feedback data is in moving state, the position corresponding to the target object in the current feedback data may have a deviation compared to a corresponding position corresponding to the target object in the historical feedback data. In order to improve the quality of the feedback data for the target object in the current feedback data, the method for correcting image data further includes: acquiring first position information of the target object from the historical feedback data; acquiring second position information of the target object from the auxiliary feedback data; determining a motion parameter based on the first position information and the second position information; determining an expected appearing position of the target object in the current feedback data based on the motion parameter; and the correcting the current feedback data based on the image data, includes: adding the image data to an actual position matching the expected appearing position in the current feedback data.

Particularly, the first position information of the target object determined based on the historical feedback data and the second position information of the target object determined based on the auxiliary feedback data are acquired; the corresponding motion parameter is determined based on the collection times of the historical feedback data and the auxiliary feedback data, the first position information, the second position information, and the historical feedback data; the expected appearing position of the target object in the current feedback data is predicted based on the motion parameter; the corresponding image data is determined, and the image data is added to the actual position matching the expected appearing position in the current feedback data, to obtain the corrected current feedback data that the position of the target object therein is closer to a true position of the target object in the current feedback data, and improve the correction quality.

In some alternative implementations of the present embodiment, because the expected appearing position obtained based on the motion parameter determined based on the first position information and the second information is a predicted position, the expected appearing position is affected by subsequent continuous moving of the moving object corresponding to the feedback data. In fact, the expected appearing position may conflict with an object at the corresponding position in the current feedback data under real conditions, resulting in superimposed display of the target object and the conflicting object. To solve this problem, after adding the image data to the actual position matching the expected appearing position in the current feedback data, the method further includes: in response to the current feedback data including a conflicting object at the actual position, the conflicting object conflicting with the image data, returning correction instruction information including the target object and the conflicting object according to a preset path.

Particularly, when the current feedback data has an object at the actual position and thus the object is conflicting with the image data of the target object, the executing body responds and returns the correction instruction information including the target object and the conflicting object according to the preset path. The correction instruction information may include the target object and the conflicting object, so that actual users may make adjustments based on the correction instruction information.

In some alternative implementations of the present embodiment, the acquiring auxiliary feedback data, the collection time of the auxiliary feedback data being after the collection time of the current feecback data, includes: acquiring a plurality of auxiliary feedback data, collection times of the plurality of auxiliary feedback data being within a second preset duration after the collection time of the current feedback data, to generate an auxiliary feedback data set; and the extracting the image data of the target object in response to the target object being included in the auxiliary feedback data, includes: in response to a proportion of target auxiliary feedback data including the target object in the auxiliary feedback data set exceeding a preset ratio, extracting the image data of the target object from a target auxiliary feedback data whose collection time being closest to the collection time of the current feedback data.

Particularly, after acquires a plurality of auxiliary feedback data whose collection times being within a second preset duration succeeding the collection time of the current feedback data, to generate an auxiliary feedback data set, and extracts, in response to the proportion of the target auxiliary feedback data including the target object in the auxiliary feedback data set exceeding the preset ratio, the executing body extracts the image data of the target object from a target auxiliary feedback data whose collection time is closest to the collection time of the current feedback data, so as to increase the number of the auxiliary feedback data, avoiding that the image data correction effect is affected by the same abnormality appeared in individual auxiliary feedback data same as that in the current feedback data.

The second preset duration may usually be determined according to the sensor that collects the feedback data or the speed of the moving object corresponding to the feedback data, or may be determined based on the collection period according which the sensor collects the historical feedback data and the current feedback data. After determining that the current feedback data needs to be corrected based on the target auxiliary feedback data in the auxiliary feedback data set, the image data of the target object is extracted from the target auxiliary feedback data whose collection time is closest to the collection time of the current feedback data, in order to reduce a feedback error caused by the movement of the moving object.

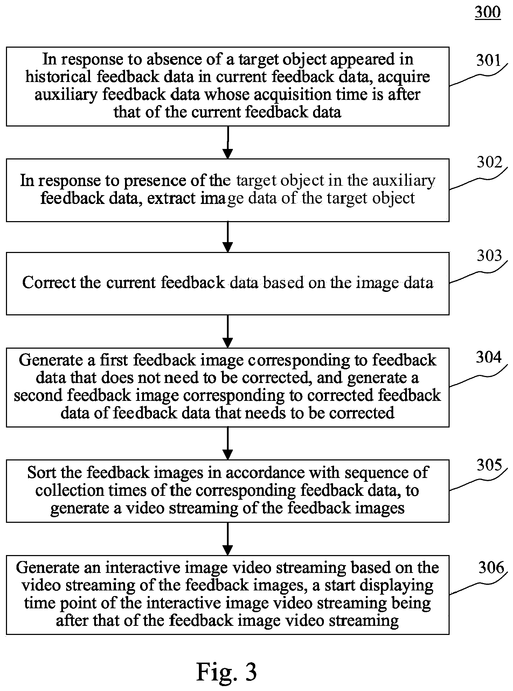

With reference to Fig. 3, Fig. 3 is a flowchart of a method for correcting image data according to another embodiment of the present disclosure, where a flow 300 includes the following steps:
Step 301, acquiring auxiliary feedback data in response to absence of a target object in current feedback data, the target object being included in historical feedback data, collection time of the auxiliary feedback data being after collection time of the current feedback data.
Step 302, extracting image data of the target object in response to the target object being included in the auxiliary feedback data.
Step 303, correcting the current feedback data based on the image data.

The above steps 301-303 are consistent with the steps 201-203 as shown in Fig. 2. For the content of the same part, reference may be made to the corresponding part of the previous embodiment, and detailed description thereof will be omitted.

Step 304, generating a first feedback image corresponding to feedback data that does not need to be corrected, and generating a second feedback image corresponding to corrected feedback data of feedback data that needs to be corrected.

In the present embodiment, a feedback image corresponding to each feedback data is generated. When a first feedback data does not need to be corrected, the first feedback image corresponding to the first feedback data is directly generated based on the first feedback data. When a second feedback data needs to be corrected, the second feedback image corresponding to corrected second feedback data is generated based on the corrected second feedback data.

Step 305, sorting the feedback images in accordance with sequence of collection times of the corresponding feedback data, to generate a video streaming of the feedback images.

In the present embodiment, the first image or the second image corresponding to the plurality of feedback data are sorted in accordance with sequence of collection times of the corresponding feedback data, to generate the video streaming of the feed back images.

It should be understood that each feedback data only corresponds to only one of the first image or the second image alone, and does not correspond to the first object and the second image at the same time.

Step 306, generating an interactive image video streaming based on the video streaming of the feedback images, wherein a start displaying time point of the interactive image video streaming is after a start displaying time point of the feedback image video streaming.

In the present embodiment, the interactive image video streaming is rendered based on the video streaming of the feedback images, and the start displaying time point of the interactive image video streaming is after the start displaying time point of the video streaming of the feedback images. That is, after the video streaming of the feedback images starts to be displayed for a certain time length, the interactive image video streaming is started to be displayed, so as to avoid display lag of the interactive image video streaming caused by the executing body performing image data correction on the feedback data.

In practice, after it is determined that there is a video streaming of feedback images, an HMI rendering system may be used to render the video streaming of feedback images into an interactive image video streaming that is capable of being played by a terminal display device.

Based on the above embodiment corresponding to Fig. 2, the present embodiment generates the final interactive image video streaming based on uncorrected feedback data and the corrected feedback data, so as to facilitate interaction with the user through the interactive image video streaming. The interactive image video obtained based on the feedback data is presented to the user, so that the user may read information included in the feedback data more intuitively, and visualization of the feedback data relative to the user is realized.

In some alternative implementations of the present embodiment, the method further includes: in response to the current feedback data including a new object not fed back in the historical feedback data, setting an appearing mode of the new object as fade in into a feedback image corresponding to the current feedback data.

Particularly, if there is a new object in the current feedback data that is not fed back in the historical feedback data, then during generating the feedback image corresponding to the current feedback data, the appearing mode of the new object is set as fade in, so as to avoid the new object suddenly jumping into the generated interactive image video streaming and causing a visual impact on the user.

In some alternative implementations of the present embodiment, the in response to the current feedback data including a new object not fed back in the historical feedback data, setting an appearing mode of the new object as fade in into a feedback image corresponding to the current feedback data, includes: in response to the current feedback data including the new object not fed back in the historical feedback data, acquiring verification feedback data, collection time of the verification feedback data being after the collection time of the current feedback data; and in response to the verification feedback data including the new object, setting the appearing mode of the new object as fade in into the feedback image corresponding to the current feedback data.

When there is a new object in the current feedback data that is not fed back in the historical data, it is further possible to acquire the verification feedback data, the collection time of the verification feedback data is after the collection time of the current feedback data, so as to verify whether the new object is misrecognized due to an abnormality in the current feedback data by verifying the content in the verification feedback data. When it is determined based on the verification feedback data that the new object is real and not a misrecognized object caused by the abnormality in the current feedback data, the appearing mode of the new object is set as fade in, to avoid incorrect addition of the new object due to sudden abnormalities in the current feedback data.

In some alternative implementations of the present embodiment, in order to improve the quality of the feedback data related to data processing, it is also possible to filter the target object to avoid the waste of computing resources caused by the implementation of the method for correcting image data when a target object which has a too low reference value or with no reference value is missing. For example, when the method for correcting image data is applied to intelligent driving and other related fields, the target object maybe set as an obstacle object that may affect the traveling of a vehicle. When current feedback data does not included an obstacle object which appeared in historical feedback data, correction is performed on the data.

To deepen understanding, an implementation scheme of the present disclosure is provided in combination with an application scenario as follows:

To facilitate understanding, the content in the feedback data is represented by schematic diagrams of the feedback images generated based on the feedback data.

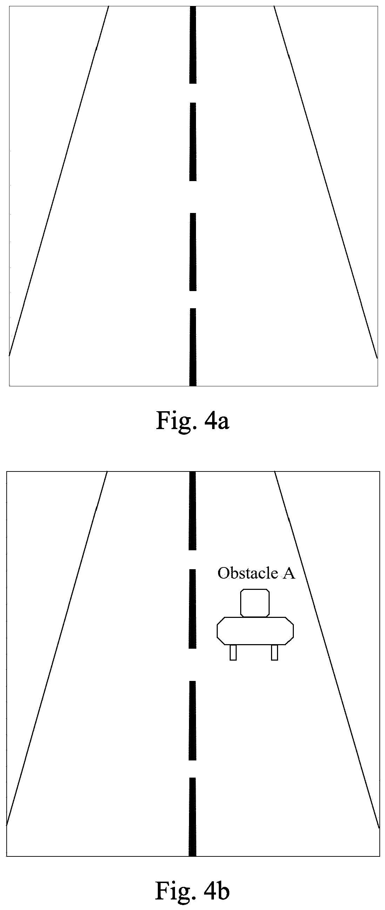

In this application scenario, a feedback image corresponding to the current feedback data acquired by the executing body is as shown in Fig. 4a, and a feedback image corresponding to the historical feedback data is as shown in Fig. 4b, where the difference between the collection time of the current feedback data and the collection time of the historical feedback data is less than a first preset duration.

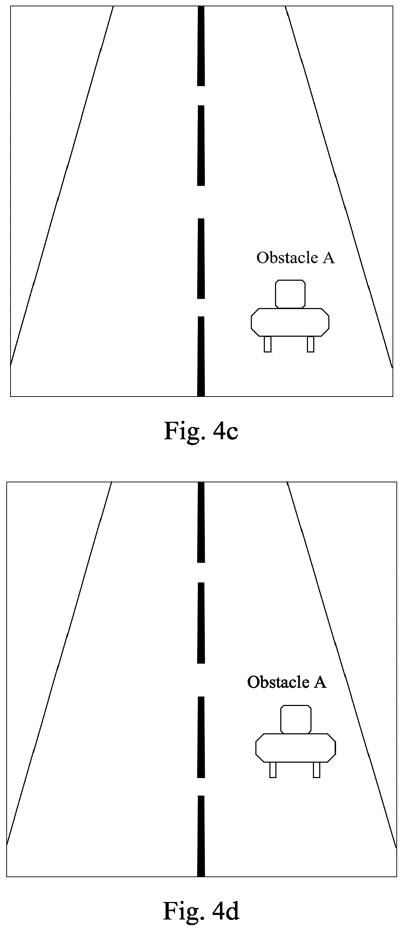

In response to absence of a target object in the current feedback data, the target object (i.e., "obstacle A" illustrated in Fig. 4b) being included in the historical feedback data, auxiliary feedback data whose collection time is after that of the current feedback data is acquired. A feedback image corresponding to the auxiliary feedback data is as shown in Fig. 4c.

In response to presence of the "obstacle A" in the auxiliary feedback data, first position information of the "obstacle A" in Fig. 4b and second position information of "obstacle A" in Fig. 4c are respectively extracted.

Based on the first position information and the second position information, a motion parameter is determined, and it is determined that the "obstacle A" should be located at an expected appearing position in Fig. 4a. Then the image data is added to an actual position matching the expected appearing position in the current feedback data, and a finally obtained feedback image is as shown in Fig. 4d.

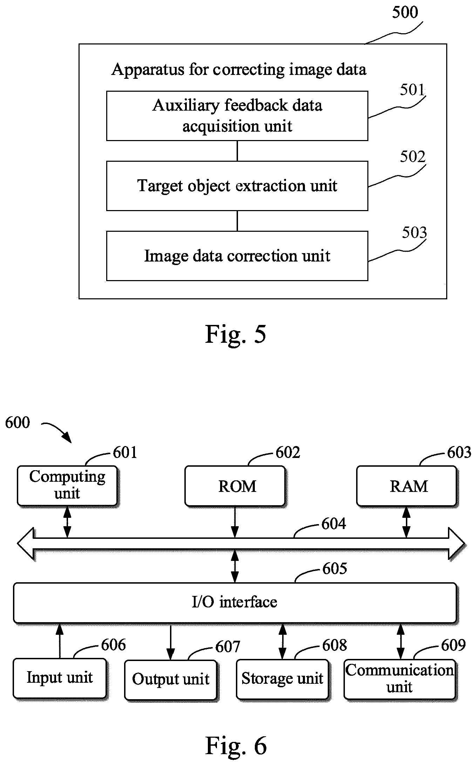

With further reference to Fig. 5, as an implementation of the method shown in the above figures, an embodiment of the present disclosure provides an apparatus for correcting image data. The apparatus embodiment corresponds to the method embodiment as shown in Fig. 2. The apparatus may be applied to various electronic devices.

As shown in Fig. 5, an apparatus 500 for correcting image data of the present embodiment may include: an auxiliary feedback data acquiring unit 501, a target object extracting unit 502, an image data correcting unit 503. The auxiliary feedback data acquiring unit 501 is configured to acquire auxiliary feedback data in response to absence of a target object in current feedback data, the target object being included in historical feedback data, collection time of the auxiliary feedback data being after collection time of the current feedback data, a difference between collection time of the historical feedback data and the collection time of the current feedback data being less than a first preset duration. The target object extracting unit 502 is configured to extract image data of the target object in response to the target object being included in the auxiliary feedback data. The image data correcting unit 503 is configured to correct the current feedback data based on the image data.

In the present embodiment, in the apparatus 500 for correcting image data: for the processing details and the technical effects of the auxiliary feedback data acquiring unit 501, the target object extracting unit 502, the image data correcting unit 503, reference may be referred to the relevant description of steps 201-203 in the embodiment corresponding to Fig. 2 respectively, and detailed description thereof will be omitted.

In some alternative implementations of the present embodiment, the apparatus 500 for correcting image data further includes: a first position information acquiring unit, configured to acquire first position information of the target object from the historical feedback data; a second position information acquiring unit, configured to acquire second position information of the target object from the auxiliary feedback data; a motion parameter determining unit, configured to determine a motion parameter based on the first position information and the second position information; a position predicting unit, configured to determine an expected appearing position of the target object in the current feedback data based on the motion parameter; and the image data correcting unit is further configured to: add the image data to an actual position matching the expected appearing position in the current feedback data.

In some alternative implementations of the present embodiment, the apparatus 500 for correcting image data further includes: a conflict prompting unit, configured to: in response to the current feedback data including a conflicting object at the actual position, the conflicting object conflicting with the image data, return correction instruction information including the target object and the conflicting object according to a preset path.

In some alternative implementations of the present embodiment, the auxiliary feedback data acquiring unit 501 includes: an auxiliary feedback data set generating subunit, configured to acquire a plurality of auxiliary feedback data, collection times of the plurality of auxiliary feedback data being within a second preset duration succeeding the collection time of the current feedback data, to generate an auxiliary feedback data set; and an image data extracting subunit, configured to: in response to a proportion of target auxiliary feedback data in the auxiliary feedback data set exceeding a preset ratio, extracting the image data of the target object from a target auxiliary feedback data whose collection time being closest to the collection time of the current feedback data, wherein the target auxiliary feedback data is auxiliary feedback data including the target object.

In some alternative implementations of the present embodiment, the apparatus 500 for correcting image data further includes: a feedback image generating unit, configured to generate a first feedback image corresponding to feedback data that does not need to be corrected, and generating a second feedback image corresponding to corrected feedback data of feedback data that needs to be corrected; a feedback video streaming generating unit, configured to sort the feedback images in accordance with sequence of collection times of the corresponding feedback data, to generate a video streaming of the feedback images; and an interactive image video streaming generating unit, configured to generate an interactive image video streaming based on the video streaming of the feedback images, wherein a start displaying time point of the interactive image video streaming is after a start displaying time point of the video streaming of the feedback images.

In some alternative implementations of the present embodiment, the apparatus 500 for correcting image data further includes: a new object adding unit, configured to: in response to the current feedback data including a new object not fed back in the historical feedback data, set an appearing mode of the new object as fade in into a feedback image corresponding to the current feedback data.

In some alternative implementations of the present embodiment, the new object adding unit includes:
a verification feedback data acquiring subunit, configured to: in response to the current feedback data including the new object not fed back in the historical feedback data, acquire verification feedback data, collection time of the verification feedback data being after the collection time of the current feedback data; and a new object adding subunit, configured to: in response to the verification feedback data including the new object, setting the appearing mode of the new object as fade in into the feedback image corresponding to the current feedback data.

The present embodiment exists as an apparatus embodiment corresponding to the above method embodiment, in the apparatus for correcting image data provided by the present embodiment, after feedback data is continuously acquired, if a target object appeared in historical feedback data does not exist in the current feedback data, the historical feedback data being collected within a preset duration preceding the collection time of the current feedback data, it is determined that the current feedback data may be abnormal, and then auxiliary feedback data collected after the current feedback data may be used to perform auxiliary detection. If it is determined that the content of the current feedback data is abnormal, image data of the target object is added to the current feedback data, realizing correction of the current feedback data, avoiding detection flicker due to abnormal individual feedback data, and improving the quality of the feedback data.

According to an embodiment of the present disclosure, some embodiment of the present disclosure also provide an electronic device, a readable storage medium, and a computer program product, the computer program product, when executed by a processor, cause the processor to implement the method for correcting image data described in any of the foregoing embodiments.

According to an embodiment of the present disclosure an autonomous vehicle equipped with the above electronic device or equipped with the apparatus for correcting image data is provided, the electronic device, when executed by a processor, cause the processor to implement the method for correcting image data described in any of the foregoing embodiments.

Fig. 6 shows a schematic block diagram of an example electronic device 600 that can be used to implement embodiments of the present disclosure. The electronic device is intended to represent various forms of digital computers such as laptop computers, desktop computers, workstations, personal digital assistants, servers, blade servers, mainframe computers, and other appropriate computers. The electronic device may also represent various forms of mobile apparatuses such as personal digital processing, cellular telephones, smart phones, wearable devices and other similar computing apparatuses. The parts shown herein, their connections and relationships, and their functions are only as examples, and not intended to limit the implementations of the present disclosure as described and/or claimed herein.

As shown in Fig. 6, the device 600 may include a computing unit 601, which may execute various appropriate actions and processes in accordance with a computer program stored in a read-only memory (ROM) 602 or a computer program loaded into a random-access memory (RAM) 603 from a storage unit 608. The RAM 603 may alternatively store various programs and data required by operations of the device 600. The computing unit 601, the ROM 602 and the RAM 603 are connected to each other through a bus 604. An input/output (I/O) interface 605 is also connected to the bus 604.

Multiple components of the device 600 are connected to the I/O interface 605, and include: an input unit 606, such as a keyboard and a mouse; an output unit 607, such as various types of displays and a speaker; a storage unit 608, such as a magnetic disk and an optical disk; and a communication unit 609, such as a network card, a modem and a wireless communication transceiver. The communication unit 609 allows the device 600 to exchange information or data with other devices through a computer network, such as the Internet and/or various telecommunications networks.

The computing unit 601 may be various general-purpose and/or specific-purpose processing components having processing and computing capabilities. Some examples of the computing unit 601 include, but are not limited to, a central processing unit (CPU), a graphics processing unit (GPU), various specific artificial intelligence (AI) computing chips, various computing units running machine learning model algorithms, a digital signal processor (DSP), and any appropriate processor, controller, microcontroller and the like. The computing unit 601 performs various methods and processing described above, such as the method for correcting image data. For example, in some embodiments, the method for correcting image data may be implemented as a computer software program, which is tangibly included in a machine-readable medium, such as the storage unit 608. In some embodiments, part or all of the computer program may be loaded and/or installed on the device 600 through the ROM 602 and/or the communication unit 609. When the computer program is loaded into the RAM 603 and executed by the computing unit 601, one or more steps of the method for correcting image data described above may be performed. Alternatively, in other embodiments, the computing unit 601 may be configured to perform the method for correcting image data in any other appropriate manner (such as through firmware).

The various implementations of the systems and technologies described herein maybe implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input device and at least one output device, and send the data and instructions to the storage system, the at least one input device and the at least one output device.

Program codes used to implement the method of the disclosure may be written in any combination of one or more programming languages. These program codes may be provided to a processor or controller of a general-purpose computer, specific-purpose computer or other programmable apparatus for correcting image data, so that the program codes, when executed by the processor or controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more specific example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server may be a cloud server, also known as cloud computing server or virtual host. Cloud server is a host product in the cloud computing service system to solve the defects of difficult management and weak business scalability in the traditional physical host and virtual private server (VPS) services. The server may also be a server of a distributed system or a server combined with blockchain.

According to the technical solution in embodiments of the present disclosure, after feedback data is continuously acquired, if a target object appeared in historical feedback data does not exist in the current feedback data, the historical feedback data being collected within a preset duration preceding the collection time of the current feedback data, it is determined that the current feedback data may be abnormal, and then auxiliary feedback data collected after the current feedback data may be used to perform auxiliary detection. If it is determined that the content of the current feedback data is abnormal, image data of the target object is added to the current feedback data, realizing correction of the current feedback data, avoiding detection flicker due to abnormal individual feedback data, and improving the quality of the feedback data.

It should be appreciated that reordering, adding or deleting of steps in the various forms shown above may be executed. For example, the steps described in embodiments of the disclosure may be executed in parallel or sequentially or in a different order, so long as the expected results of the technical solutions provided in embodiments of the disclosure maybe realized, and no limitation is imposed herein.

The above specific implementations are not intended to limit the scope of the disclosure. It should be appreciated by those skilled in the art that various modifications, combinations, sub-combinations, and substitutions may be made depending on design requirements and other factors. Any modification, equivalent and modification that fall within the spirit and principles of the disclosure are intended to be included within the scope of the disclosure.

## Claims

1. A method for correcting image data, the method comprising:
acquiring (201, 301) auxiliary feedback data in response to absence of a target object in current feedback data, the target object being included in historical feedback data, collection time of the auxiliary feedback data being after collection time of the current feedback data, a difference between collection time of the historical feedback data and the collection time of the current feedback data being less than a first preset duration;
extracting (202, 302) image data of the target object in response to the target object being included in the auxiliary feedback data; and
correcting (203, 303) the current feedback data based on the image data.

2. The method according to claim 1, further comprising:
acquiring first position information of the target object from the historical feedback data;
acquiring second position information of the target object from the auxiliary feedback data;
determining a motion parameter based on the first position information and the second position information;
determining an expected appearing position of the target object in the current feedback data based on the motion parameter; and
the correcting the current feedback data based on the image data, comprises:
adding the image data to an actual position matching the expected appearing position in the current feedback data.

3. The method according to claim 2, wherein, after adding the image data to the actual position matching the expected appearing position in the current feedback data, the method further comprises:
in response to the current feedback data including a conflicting object at the actual position, the conflicting object conflicting with the image data, returning correction instruction information including the target object and the conflicting object according to a preset path.

4. The method according to any one of the claims 1-3, wherein acquiring (201) the auxiliary feedback data, the collection time of the auxiliary feedback data being after the collection time of the current feedback data, comprises:
acquiring a plurality of auxiliary feedback data, collection times of the plurality of auxiliary feedback data being within a second preset duration succeeding the collection time of the current feedback data, to generate an auxiliary feedback data set; and
the extracting (202) the image data of the target object in response to the target object being included in the auxiliary feedback data, comprises:
in response to a proportion of target auxiliary feedback data including the target object in the auxiliary feedback data set exceeding a preset ratio, extracting the image data of the target object from a target auxiliary feedback data whose collection time being closest to the collection time of the current feedback data.

5. The method according to any one of claims 1-4, further comprising:
generating (304) a first feedback image corresponding to feedback data that does not need to be corrected, and generating a second feedback image corresponding to corrected feedback data of feedback data that needs to be corrected;
sorting (305) the feedback images in accordance with sequence of collection times of the corresponding feedback data, to generate a video streaming of the feedback images; and
generating (306) an interactive image video streaming based on the video streaming of the feedback images, wherein a start displaying time point of the interactive image video streaming is after a start displaying time point of the video streaming of the feedback images.

6. The method according to claim 5, further comprising:
in response to the current feedback data including a new object not fed back in the historical feedback data, setting an appearing mode of the new object as fade in into a feedback image corresponding to the current feedback data.

7. The method according to claim 6, wherein in response to the current feedback data including the new object not fed back in the historical feedback data, setting the appearing mode of the new object as fade in into the feedback image corresponding to the current feedback data, comprises:
in response to the current feedback data including the new object not fed back in the historical feedback data, acquiring verification feedback data, collection time of the verification feedback data being after the collection time of the current feedback data; and
in response to the verification feedback data including the new object, setting the appearing mode of the new object as fade in into the feedback image corresponding to the current feedback data.

8. An apparatus for correcting image data, the apparatus comprising:
an auxiliary feedback data acquiring unit, configured to acquire auxiliary feedback data in response to absence of a target object in current feedback data, the target object being included in historical feedback data, collection time of the auxiliary feedback data being after collection time of the current feedback data, a difference between collection time of the historical feedback data and the collection time of the current feedback data being less than a first preset duration;
a target object extracting unit, configured to extract image data of the target object in response to the target object being included in the auxiliary feedback data; and
an image data correcting unit, configure to correct the current feedback data based on the image data.

9. The apparatus according to claim 8, further comprising:
a first position information acquiring unit, configured to acquire first position information of the target object from the historical feedback data;
a second position information acquiring unit, configured to acquire second position information of the target object from the auxiliary feedback data;
a motion parameter determining unit, configured to determine a motion parameter based on the first position information and the second position information;
a position predicting unit, configured to determine an expected appearing position of the target object in the current feedback data based on the motion parameter; and
the image data correcting unit is further configured to: add the image data to an actual position matching the expected appearing position in the current feedback data.

10. The apparatus according to claim 9, wherein the apparatus further comprises:
a conflict prompting unit, configured to: in response to the current feedback data including a conflicting object at the actual position, the conflicting object conflicting with the image data, return correction instruction information including the target object and the conflicting object according to a preset path.

11. The apparatus according to any one of claims 8-10, wherein the auxiliary feedback data acquiring unit comprises:
an auxiliary feedback data set generating subunit, configured to acquire a plurality of auxiliary feedback data, collection times of the plurality of auxiliary feedback data being within a second preset duration succeeding the collection time of the current feedback data, to generate an auxiliary feedback data set; and
an image data extracting subunit, configured to: in response to a proportion of target auxiliary feedback data including the target object in the auxiliary feedback data set exceeding a preset ratio, extracting the image data of the target object from a target auxiliary feedback data whose collection time being closest to the collection time of the current feedback data.

12. The apparatus according to any one of claims 8-11, further comprising:
a feedback image generating unit, configured to generate a first feedback image corresponding to feedback data that does not need to be corrected, and generating a second feedback image corresponding to corrected feedback data of feedback data that needs to be corrected;
a feedback video streaming generating unit, configured to sort the feedback images in accordance with sequence of collection times of the corresponding feedback data, to generate a video streaming of the feedback image; and
an interactive image video streaming generating unit, configured to generate an interactive image video streaming based on the video streaming of the feedback images, wherein a start displaying time point of the interactive image video streaming is after a start displaying time point of the video streaming of the feedback images.

13. The apparatus according to claim 12, further comprising:
a new object adding unit, configured to: in response to the current feedback data including a new object not fed back in the historical feedback data, set an appearing mode of the new object as fade in into a feedback image corresponding to the current feedback data.

14. The apparatus according to claim 13, wherein the new object adding unit comprises:
a verification feedback data acquiring subunit, configured to: in response to the current feedback data including the new object not fed back in the historical feedback data, acquire verification feedback data, collection time of the verification feedback data being after the collection time of the current feedback data; and
a new object adding subunit, configured to: in response to the verification feedback data including the new object, setting the appearing mode of the new object as fade in into the feedback image corresponding to the current feedback data.

15. A non-transitory computer readable storage medium, storing computer instructions thereon, the computer instructions, being used to cause the computer to perform the method for correcting image data according to any one of claims 1-7.
